# EUROPEAN PATENT APPLICATION

(11) **EP 4 693 166 A1**
(43) Date of publication of application: **11.02.2026**
(21) Application number: 24811283.1
(22) Date of filing: 25.04.2024
(51) Int. Cl.: G06T 3/4053, G06T 3/403, G06F 3/0482

(54) **ELECTRONIC DEVICE AND CONTROL METHOD THEREFOR**

(30) Priority: 22.05.2023 KR 20230065837
(71) Applicant: Samsung Electronics Co., Ltd., Suwon-si, Gyeonggi-do 16677 (KR)
(72) Inventor: JEONG, Donghwa, Suwon-si Gyeonggi-do 16677 (KR); KIM, Sehyun, Suwon-si Gyeonggi-do 16677 (KR); KIM, Donguk, Suwon-si Gyeonggi-do 16677 (KR); KIM, Yeonwoo, Suwon-si Gyeonggi-do 16677 (KR); LEE, Jongin, Suwon-si Gyeonggi-do 16677 (KR)
(74) Representative: Appleyard Lees IP LLP
(86) International application number: PCT/KR2024/005582
(87) International publication number: WO 2024/242344

(57) **Abstract**

An electronic apparatus and a controlling method thereof are provided. The electronic apparatus includes memory, a display, and a processor for controlling the electronic apparatus. The processor is configured to obtain at least one input image. The processor is configured to identify a first scaler for scaling a first input image and a second scaler for scaling a second input image among the at least one input image based on attribute information of the at least one input image. The processor is configured to output a first image in which the first input image is scaled using the first scaler and a second image in which the second input image, on which image quality processing has been performed, is scaled using the second scaler.

## Description

### [Technical Field]

The present disclosure relates to an electronic apparatus and a controlling method thereof, and more particularly, to an electronic apparatus for providing images to persons with low vision and a controlling method thereof.

### [Background Art]

Users with poor vision or visual impairments find it difficult to accurately perceive images displayed on electronic apparatuses due to their vision problems.

To address this, various services have recently been provided to improve the accessibility of electronic apparatuses for individuals with low vision.

### [Disclosure of Invention]

### [Solution to Problem]

An electronic apparatus according to an embodiment includes memory, a display, and a processor for controlling the electronic apparatus. The processor is configured to obtain at least one input image. The processor is configured to identify a first scaler for scaling a first input image and a second scaler for scaling a second input image among the at least one input image based on attribute information of the at least one input image. The processor is configured to control the display to output a first image in which the first input image is scaled using the first scaler and a second image in which the second input image, on which image quality processing has been performed, is scaled using the second scaler..

A method of controlling an electronic apparatus includes obtaining at least one input image, identifying a first scaler for scaling a first input image and a second scaler for scaling a second input image among the at least one input image based on attribute information of the at least one input image, and outputting a first image in which the first input image is scaled using the first scaler and a second image in which the second input image, on which image quality processing has been performed, is scaled using the second scaler.

In a non-transitory computer-readable recording medium storing a computer instruction that causes an electronic apparatus to perform operations when executed by one or more processors included in the electronic apparatus, the operations include identifying a first scaler for scaling a first input image and a second scaler for scaling a second input image among the at least one input image based on attribute information of the at least one input image, and outputting a first image in which the first input image is scaled using the first scaler and a second image in which the second input image, on which image quality processing has been performed, is scaled using the second scaler.

### [Brief Description of Drawings]

FIG. 1 is a view provided to explain an operation of an electronic apparatus according to an embodiment;
FIG. 2 is a block diagram illustrating configuration of an electronic apparatus according to an embodiment;
FIGS. 3A and 3B are views provided to explain a method of performing image processing in a single view mode and a multi-view mode according to an embodiment;
FIG. 4 is a view provided to explain a method of obtaining a plurality of images by processing an input image in a multi-view mode according to an embodiment;
FIG. 5 is a view provided to explain a method of obtaining a plurality of images by processing a plurality of input images in a multi-view mode according to an embodiment;
FIG. 6 is a view provided to explain a method of providing a plurality of images in a PIP mode according to an embodiment;
FIG. 7 is a view provided to explain an embodiment in which four images are displayed according to an embodiment; and
FIG. 8 is a flowchart provided to explain a method of controlling an electronic apparatus according to an embodiment.

### [Mode for Invention]

Various embodiments in this disclosure and the terms used herein do not intend to limit the technical features in this disclosure to specific embodiments, but should be understood to include various modifications, equivalents or alternatives of the corresponding embodiments.

With respect to the description of the drawings, similar components may be denoted by similar reference numerals.

The singular form of a noun corresponding to an item may include one item or a plurality of items, unless the relevant context clearly indicates otherwise.

In this disclosure, "A or B", "at least one of A and B", "at least one of A or B", "A, B or C", "at least one of A, B and C", and "at least one of A, B, or C" may each include any one of the items listed together in the corresponding phrase, or any possible combination thereof. For example, the term "A or B", "at least one of A and B", or "at least one of A or B" may refer to all of the case (1) where at least one A is included, the case (2) where at least one B is included, or the case (3) where both of at least one A and at least one B are included.

Terms "first", "second", "1^{st}," or "2^{nd}," may be used simply to distinguish the corresponding component from other corresponding components, and may limit the corresponding components in other aspects (e.g. : importance or order).

When it is mentioned that one (e.g., first) component is "coupled" or "connected" to another (e.g., second) component, with or without the terms "functionally" or "communicatively", it means that the component can be connected to another component directly (e.g. wired), wirelessly, or through a third component.

Terms such as "have" or "include" are intended to designate the presence of features, numbers, steps, operations, components, parts, or a combination thereof described in this disclosure, but are not intended to exclude the presence or addition of one or more other features, numbers, steps, operations, components, parts, or a combination thereof in advance.

When a component is said to be "connected," "coupled," "supported," or "in contact" with another component, this means not only when the components are directly connected, coupled, supported, or in contact, but also when they are indirectly connected, coupled, supported, or in contact through a third component.

When a component is said to be located "on" another component, this includes not only a case where a component is in contact with another component, but also a case where another component exists between the two components.

The term "and/or" includes a combination of a plurality of related elements described herein or any element of a plurality of related elements described herein.

In some cases, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

In exemplary embodiments, a 'module' or a 'unit' may perform at least one function or operation, and be implemented as hardware or software or be implemented as a combination of hardware and software. In addition, a plurality of 'modules' or a plurality of 'units' may be integrated into at least one module and be implemented as at least one processor (not shown) except for a 'module' or a 'unit' that needs to be implemented as specific hardware.

Meanwhile, various elements and regions in the drawings are schematically drawn in the drawings. Therefore, the technical concept of the disclosure is not limited by a relative size or spacing drawn in the accompanying drawings.

Hereinafter, an embodiment according to the present disclosure will be described in detail with reference to the accompanying drawings.

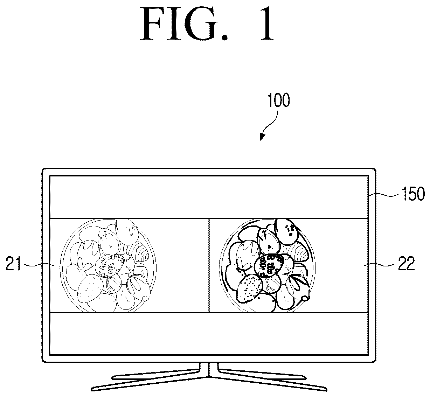

FIG. 1 is a view provided to explain an operation of an electronic apparatus according to an embodiment.

Referring to FIG. 1, an electronic apparatus 100 may output an image. The image may be composed of a plurality of frames. The image may include various video content such as a television program, a movie, or a drama, which are provided in real time from an image source or provided through a VOD service. The image source may include a terrestrial broadcasting station, a cable broadcasting station, a video streaming service provider, an OTT service provider, or an IPTV service provider that provides video content.

The electronic apparatus 100 may be implemented as a television (TV). For example, the electronic apparatus 100 may be a light emitting diode (LED) TV, an organic light emitting diode (OLED) TV, a quantum dot light emitting diode (QLED) TV, a quantum dot TV, or a digital signage device (e.g., an LED display module arranged in one or in a matrix form). In addition, the electronic apparatus 100 may be a flat-screen TV, a curved TV having a fixed curvature, or a curvature-variable TV having a changeable curvature. However, although the electronic apparatus 100 may be implemented as a television, this is merely one embodiment, and the electronic apparatus 100 may be implemented as a video providing device such as a set-top box or as a device such as a server.

According to one or more embodiments, the electronic apparatus 100 may operate in one of a single-view mode and a multi-view mode. The single-view mode may be a mode in which one input image is processed to generate one image and the one image is output to a display 150. The multi-view mode may be a mode in which an operation corresponding to a multi-view function is performed, and in which at least one input image is processed to generate a plurality of images and the plurality of images are output to the display 150.

The plurality of images may include a first image 21 and a second image 22. The first image 21 may be an image for a general user (e.g., a user with normal vision or a non-disabled person), and the second image 22 may be an image for a person with low vision (or a visually impaired person). In particular, while operating in the multi-view mode, the electronic apparatus 100 may simultaneously display the first image 21 for a general user and the second image 22 for a person with low vision. For example, while operating in the multi-view mode, the electronic apparatus 100 may output the first image 21 and the second image 22 side by side to the display 150, as shown in FIG. 1. Meanwhile, although the multi-view mode may display two images as illustrated in FIG. 1, this is merely one embodiment, and three or more images may also be displayed together.

Processing of the input image may include first image quality processing to obtain an image for a general user and second image quality processing to obtain an image for a person with low vision. The first image quality processing may include image quality processing to improve the quality of the input image. The second image quality processing may include image quality processing to improve the quality of the input image and image quality processing to enable a person with low vision to better perceive the image. In general, people with low vision (or people with visual impairments) tend to prefer images in which detailed expressions inside an object are omitted and the contours of the object are more clearly emphasized. Accordingly, the electronic apparatus 100 may perform flattening processing of the input image and/or contour processing to emphasize the contours of an object included in the input image, and may perform image quality processing to improve the quality of the processed image, thereby obtaining a second image 22 for a person with low vision.

As such, the electronic apparatus 100 may process one input image to obtain a first image 21 for a general user and the second image 22 for a person with low vision, and may display the first image 21 and the second image 22 together. Accordingly, a general user and a person with low vision may view the same video content together, and accessibility to the electronic apparatus 100 may be improved in that a person with low vision is provided with video content with improved visibility.

In particular, according to one or more embodiments, while operating in the multi-view mode, the electronic apparatus 100 may identify a first scaler for scaling a first input image for a general user and a second scaler for scaling a second input image for a person with low vision, based on attribute information of at least one input image. Subsequently, the first input image and the second input image may be scaled using the identified first scaler and the second scaler. As a result, when both a general user and a person with low vision watch an image together through the multi-view mode, the optimal image quality suitable for each viewer may be provided, thereby providing the best viewing experience for all users. In addition, since such an optimal viewing experience is automatically processed without requiring the user to directly set the same, convenient and comfortable viewing becomes possible.

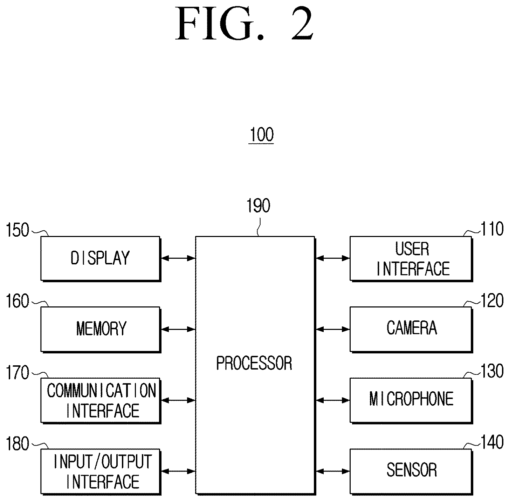

FIG. 2 is a block diagram illustrating configuration of an electronic apparatus according to an embodiment. As illustrated in FIG. 2, the electronic apparatus 100 according to various embodiments may include a user interface 110, a camera 120, a microphone 130, a sensor 140, a display 150, memory 160, a communication interface 170, and a processor 190. However, this is merely one embodiment, and depending on the type of the electronic apparatus 100, some configurations may be omitted or added. For example, when the electronic apparatus 100 is implemented as a set-top box, the electronic apparatus 100 may not include the display 150.

The user interface 110 may include a button, a lever, a switch, a touch-type interface, etc. In this case, the touch-type interface may be implemented in a manner of receiving an input through a user's touch on the screen of the display 150 of the electronic apparatus 100.

In particular, the user interface 110 may obtain a user input to enter a multi-view mode. In other words, the user interface 110 may obtain a user input for to enter the multi-view mode through a menu displayed on the display 150.

Alternatively, the user interface 110 may obtain a user input to execute a function of processing an image for a person with low vision (e.g., Relumino function or video accessibility).

The camera 120 may capture still images and moving images. The camera 120 according to various embodiments of the present disclosure may include one or more lenses, an image sensor, an image signal processor, and a flash. The one or more lenses may include a telephoto lens, a wide-angle lens, and a super wide-angle lens disposed on a surface of the electronic apparatus 100, and may further include a three-dimensional depth lens. The camera 120 may be disposed on a surface (e.g., rear surface or front surface) of the electronic apparatus 100, but is not limited thereto, and various embodiments according to the present disclosure may be implemented through connection with a camera 120 that exists separately from the electronic apparatus 100.

In particular, the camera 120 may capture at least one user who is viewing an image output by the electronic apparatus 100. The processor 190 may analyze the captured image and execute an image quality improvement function for a person with low vision when a person with low vision is detected.

The microphone 130 may mean a device that detects sound and converts the sound into an electrical signal. For example, the microphone 130 may detect a voice in real time and convert the detected voice into an electrical signal, and the electronic apparatus 100 may perform an operation corresponding to the electrical signal. The microphone 130 may include a TTS module or an STT module.

The microphone 130 may be included not only as a component of the electronic apparatus 100 but also as a component of a remote controller (not shown) that controls an external electronic apparatus 200.

Specifically, the microphone 130 may detect a voice including a user command to generate a plan view image, and convert the voice including the user command into an electrical signal so that the electronic apparatus 100 may control an operation of the camera 120 for generating a plan view image based on the electrical signal. In addition, when the microphone 130 is included as a component of a remote controller (not shown) that controls a display device 200, operations such as generating/editing a plan view image may be performed through the display device 200 based on a user command input through the microphone provided in the remote controller.

The remote controller (not shown) of the electronic apparatus 100 may include the microphone 130, and may include a configuration for converting a voice for voice recognition into an electrical signal.

Another embodiment of the present disclosure may include a case where a remote-control application is installed in the electronic apparatus 100 to detect a user voice command through the microphone 130 and perform operations such as generating/editing a plan view image through a voice recognition function.

The sensor 140 may detect a state (e.g., movement) of the electronic apparatus 100 or an external environmental state (e.g., a user state), and may generate an electrical signal or a data value corresponding to the detected state. For example, a gesture sensor or an acceleration sensor may be included.

The sensor 140 may include a gesture sensor, and the electronic apparatus 100 may detect a preset user gesture for generating a plan view image and perform an operation for generating the plan view image.

The display 150 may include various types of display panels such as a Liquid Crystal Display (LCD) panel, an Organic Light Emitting Diode (OLED) panel, an Active-Matrix Organic Light-Emitting Diode (AM-OLED), a Liquid Crystal on Silicon (LCoS), a Quantum dot Light-Emitting Diode (QLED), a Digital Light Processing (DLP), a Plasma Display Panel (PDP) panel, an inorganic LED panel, or a micro LED panel, but is not limited thereto. Meanwhile, the display 150 may form a touchscreen together with a touch panel, and may be formed of a flexible panel.

The display 150 may output a plurality of images while operating in the multi-view mode. In this case, at least one of the plurality of images may be an image for a general viewer, and the remaining images may be images for a person with low vision.

When the electronic apparatus 100 is a display device including the display, the electronic apparatus 100 may output a plurality of images on the display, but this is merely one embodiment, and when the electronic apparatus 100 is an electronic apparatus such as a set-top box not including the display, the electronic apparatus 100 may output the plurality of images to an external display device.

The memory 160 may store an operating system (OS) for controlling overall operations of the components of the electronic apparatus 100 and instructions or data related to the components of the electronic apparatus 100. In particular, the memory 160 may include a plurality of modules for providing a plurality of images to a general user and a person with low vision during the multi-view mode. In particular, when a function of providing an image with improved image quality for a person with low vision is executed during the multi-view mode, the electronic apparatus 100 may load various modules stored in a non-volatile memory into a volatile memory to perform various operations. Here, loading means an operation of fetching and storing data stored in a non-volatile memory into a volatile memory so that the processor 190 can access the data.

Meanwhile, the memory 160 may be implemented as a non-volatile memory (e.g., a hard disk, an SSD (Solid State Drive), a flash memory), a volatile memory (including memory within at least one processor 170), etc.

The communication interface 170 may include at least one circuit and may perform communication with various types of external devices or servers. The communication interface 170 may include at least one of a Bluetooth Low Energy (BLE) module, a Wi-Fi communication module, a cellular communication module, a third generation (3G) communication module, a fourth generation (4G) communication module, a 4G Long Term Evolution (LTE) communication module, or a fifth generation (5G) communication module.

In particular, the communication interface 170 may obtain an input image from the outside. Alternatively, the communication interface 170 may transmit a plurality of images to be provided during the multi-view mode to an external output device.

The input/output interface 180 is configured to input or output at least one of an audio signal or a video signal. For example, the input/output interface 180 may be a High Definition Multimedia Interface (HDMI), but this is merely one embodiment, and the input/output interface 180 may be any one of a Mobile High-Definition Link (MHL), a Universal Serial Bus (USB), a Display Port (DP), a Thunderbolt, a Video Graphics Array (VGA) port, an RGB port, a D-subminiature (D-SUB), or a Digital Visual Interface (DVI). Depending on the implementation, the input/output interface 180 may include a separate port for inputting and outputting only an audio signal and a separate port for inputting and outputting only a video signal, or may be implemented as a single port for inputting and outputting both an audio signal and a video signal.

In particular, the electronic apparatus 100 may obtain at least one input image through the input/output interface 180, and may provide a plurality of images to be provided during the multi-view mode to an external output device.

The processor 190 may control the electronic apparatus 100 according to at least one instructions stored in the memory 160.

In particular, the processor 190 may include one or more processors. Specifically, the one or more processors may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors may control one or any combination of other components of the electronic apparatus, and may perform operations related to communication or data processing. The one or more processors may execute one or more programs or instructions stored in the memory. For example, the one or more processors may perform a method according to an embodiment of the present disclosure by executing one or more instructions stored in the memory.

In a case where the method according to an embodiment of the disclosure includes a plurality of operations, the plurality of operations may be performed by one processor or by a plurality of processors. For example, in a case where a first operation, a second operation, and a third operation are performed by the method according to an embodiment, all of the first operation, the second operation, and the third operation may be performed by a first processor, or the first operation and the second operation may be performed by the first processor (e.g., a general-purpose processor) and the third operation may be performed by a second processor (e.g., an artificial intelligence-dedicated processor). For example, according to an embodiment, operations such as identifying a corner in a handwriting image or correcting a space in the handwriting image by using a neural network model may be performed by a processor performing parallel computation such as a GPU or an NPU, and operations such as generating/editing a plan view image or post-processing operations may be performed by a general-purpose processor such as a CPU.

The one or more processors may be implemented as a single-core processor including one core, or may be implemented as one or more multi-core processors including a plurality of cores (e.g., homogeneous multiple cores or heterogeneous multiple cores). In a case where the one or more processors are implemented as multi-core processors, each of the plurality of cores included in the multi-core processors may include a processor internal memory such as a cache memory or an on-chip memory, and a common cache shared by the plurality of cores may be included in the multi-core processors. In addition, each of the plurality of cores (or some of the plurality of cores) included in the multi-core processors may independently read and execute program instructions for implementing the method according to an embodiment, or all (or some) of the plurality of cores may be linked to each other to read and execute program instructions for implementing the method according to an embodiment.

In a case where the method according to an embodiment includes a plurality of operations, the plurality of operations may be performed by one of the plurality of cores included in the multi-core processors, or may be performed by the plurality of cores. For example, in a case where a first operation, a second operation, and a third operation are performed by the method according to an embodiment, all of the first operation, the second operation, and the third operation may be performed by a first core included in the multi-core processors, or the first operation and the second operation may be performed by the first core included in the multi-core processors, and the third operation may be performed by a second core included in the multi-core processors.

In embodiments of the disclosure, the processor 190 may refer to a system on a chip (SoC) in which one or more processors and other electronic components are integrated, a single-core processor, multi-core processors, or a core included in the single-core processor or the multi-core processors. Here, the core may be implemented as CPU, GPU, APU, MIC, DSP, NPU, hardware accelerator, machine learning accelerator, or the like, but the embodiments of the disclosure are not limited thereto.

In particular, the processor 190 obtains at least one input image. Subsequently, the processor 190 identifies a first scaler for scaling a first input image for a general user among the at least one input image, and a second scaler for scaling a second input image for a person with low vision, based on attribute information of the at least one input image. Then, the processor 190 performs image quality processing on the second input image for the person with low vision. In addition, the processor 190 performs scaling for the first input image by using the first scaler to obtain a first image, and performs scaling for the second input image, for which image quality processing has been performed, by using the second scaler to obtain a second image. Subsequently, the processor 190 outputs the first image and the second image.

In one or more embodiments, when the input image is one, the processor 190 may identify a scaler capable of processing with the highest image quality among a plurality of scalers as the first scaler, and identify one of the remaining scalers as the second scaler.

In one or more embodiments, the attribute information of the at least one input image may include at least one of resolution or a refresh rate of the at least one input image.

In one or more embodiments, when there are a plurality of input images, the processor 190 may compare attribute information of a first input image and attribute information of a second input image among the plurality of input images. Subsequently, when the attribute information of the first input image and the attribute information of the second input image are the same, the processor 190 may identify a scaler capable of processing with the highest image quality among the plurality of scalers as the first scaler, and identify one of the remaining scalers as the second scaler. In addition, when the attribute information of the first input image has a higher image quality than the attribute information of the second input image (i.e., when the resolution and/or refresh rate of the first input image included in the attribute information of the first input image is higher than the resolution and/or refresh rate of the second input image included in the attribute information of the second input image), the processor 190 may identify a scaler capable of processing with the highest image quality as the first scaler, and identify one of the remaining scalers as the second scaler. However, when the attribute information of the second input image has a higher image quality than the attribute information of the first input image (i.e., when the resolution and/or refresh rate of the second input image included in the attribute information of the second input image is higher than the resolution and/or refresh rate of the first input image included in the attribute information of the first input image), the processor 190 may identify a scaler capable of processing with the highest image quality as the first scaler, and identify one of the remaining scalers as the first scaler.

In one or more embodiments, the image quality processing may include at least one of flattening processing on the second input image and contour processing to emphasize contours of an object included in the second input image.

In one or more embodiments, while an operation corresponding to a multi-view function is performed (i.e., during an operation in a multi-view mode), when a user command to select an image quality improvement function for a person with low vision is input, the processor 190 may output a menu for selecting an image for performing image quality processing for a person with low vision. The processor 190 may identify the second input image for performing the image quality processing for a person with low vision among a plurality of input images based on a user input entered through the menu.

In addition, when the input image is one, the second input image may be obtained by capturing the first input image.

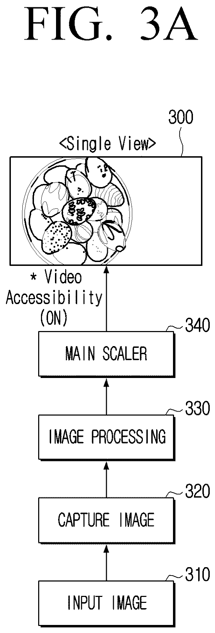

FIG. 3A is a view provided to explain a method of performing image processing in a single view mode according to an embodiment. Specifically, in one embodiment of the present disclosure, the electronic apparatus 100 may execute a function of providing an image with improved image quality for a person with low vision during a single view mode.

The electronic apparatus 100 may receive an image from an image source (310). Here, the image source may include a terrestrial broadcasting station, a cable broadcasting station, a video streaming service provider, an OTT service provider, an IPTV service provider, etc. providing video content. Alternatively, the image source may be an external device connected to the memory 160, the communication interface 170, or the input/output interface 180 of the electronic apparatus 100.

The electronic apparatus 100 may capture an image input from the image source (320). In this case, the electronic apparatus 100 may lower the resolution of the captured image through down-sampling, and may adjust the frame rate of the captured image. For example, the electronic apparatus 100 may adjust the resolution of the captured image so that the captured image has a vertical resolution of 540p (or, a vertical resolution equal to or less than 540p), and may adjust the frame rate of the captured image to 30 Hz. Adjusting the resolution and frame rate of the captured image in this manner is in consideration of the specification of the SRP for performing image quality processing (330).

The electronic apparatus 100 may perform image quality processing on the captured image (330). In this case, the image quality processing may perform flattening processing and/or contour processing on the obtained image.

The flattening processing refers to processing that removes details inside an object included in the input image. The electronic apparatus 100 may perform the flattening processing by removing textures or detailed expressions inside an object included in the image. Accordingly, the inside of the object included in the input image may be processed to become blurred or smudged.

The contour processing refers to emphasizing the contours of an object by displaying the contour thicker or by processing the contour with a specific color. For example, the electronic apparatus 100 may detect the contours of an object included in an input image. Subsequently, the electronic apparatus 100 may adjust the thickness and color of the contour according to contour parameters. The contour parameters may include the intensity and color of the contour. The intensity of the contour may include a degree of thickness and/or a degree of darkness of the contour. As the intensity of the contour increases, the contour may be adjusted to be thicker and darker. The electronic apparatus 100 may adjust the thickness and color of the contour according to the contour parameters, and may overlay the adjusted contour on the image.

The electronic apparatus 100 may perform scaling on the input image on which image quality processing (330) has been performed by using a scaler (i.e., a main scaler) capable of processing with the highest image quality (340). The main scaler may scale the input image so that the input image corresponds to a resolution (or size) displayed on the display. The scaling may include up-scaling for compensating pixels that increase in a low-resolution image to implement a high-resolution image. For example, when the input image is displayed on the display 150 at a resolution of 4K (3840×2160), the main scaler may scale the input image to generate the input image having a resolution of 4K. In addition, when the input image is displayed on the display 150 at a resolution of 8K (7680×4320), the main scaler may scale the input image to generate the input image having a resolution of 8K. However, this is merely one example, and a main scaler 311 may generate images having various resolutions such as SD (640×480), HD (1280×720), Full HD (1920×1080), QHD (2560×1440), 4K, 8K, etc., according to a resolution at which the input image is processed and displayed on the display 150.

Through operations 310 to 340, the electronic apparatus 100 may output an image 22 for a person with low vision to the display 150 as illustrated in FIG. 3A.

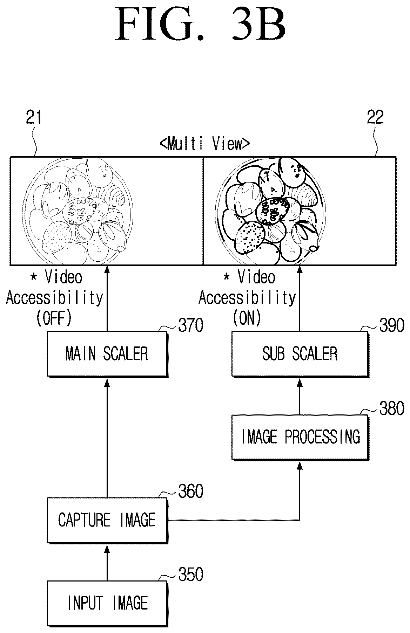

FIG. 3B is a view provided to explain a method of performing image processing in a multi-view mode according to an embodiment. Specifically, in one embodiment of the present disclosure, the electronic apparatus 100 may execute a function of providing an image with improved image quality for a person with low vision during a multi-view mode.

The electronic apparatus 100 may receive an image from an image source (350). In this case, the electronic apparatus 100 may receive one input image from one image source; however, this is only one embodiment, and according to a user input, the electronic apparatus 100 may receive a plurality of input images from at least one image source.

The electronic apparatus 100 may capture an image input from an image source (350). In this case, the electronic apparatus 100 may lower the resolution of the captured image through down-sampling, and may adjust the frame rate of the captured image.

The electronic apparatus 100 may perform image quality processing on the captured image (380). In this case, the image quality processing may perform flattening processing and/or contour processing on the obtained image. Since the flattening processing and the contour processing have been explained in FIG. 3A, overlapping descriptions are omitted.

The electronic apparatus 100 may scale the input image by using a main scaler to obtain a first image (370), and may scale the input image, for which image quality processing has been performed, by using a sub scaler to obtain a second image (380).

In this case, the electronic apparatus 100 may identify a first scaler for scaling a first input image for a general user and a second scaler for scaling a second input image for a person with low vision, among at least one input image, based on attribute information of the at least one input image.

Specifically, when the input image is one, that is, when the first image and the second image among a plurality of images displayed in a multi-view mode are the same input image, the electronic apparatus 100 may identify a main scaler capable of processing the first input image with the highest image quality among the plurality of scalers as the first scaler, and may identify one of the remaining scalers (i.e., a sub scaler) as the second scaler. For example, when one input image having a resolution of 2K is input, electronic apparatus 100 may identify a main scaler capable of processing the first input image with the highest image quality as the first scaler, and may identify a sub scaler as the second scaler. In other words, as illustrated in FIG. 3B, the main scaler may be used when processing an image for a general user, and the sub scaler may be used when processing an image for a person with low vision. This is because if all of a plurality of scalers included in the electronic apparatus 100 process the best image quality (e.g., 4K), manufacturing cost increases, and thus, the main scaler may have performance capable of processing up to the best image quality (e.g., 4K), and the remaining sub scalers may have performance capable of processing lower image quality (e.g., 2K or FHD) than the main scaler. In this case, the reason for selecting a scaler with better performance for a general user is that image quality processing on the image for a person with low vision (380) has already been performed.

When there are a plurality of input images, that is, when a first image and a second image among the plurality of images displayed in a multi-view mode are different input images, the electronic apparatus 100 may compare attribute information of a first input image for a general user and attribute information of a second input image for a person with low vision. In this case, the attribute information of the input image may include at least one of resolution or a refresh rate. The electronic apparatus 100 may identify whether the resolution/refresh rate of the first input image is the same as the resolution/refresh rate of the second input image. When the resolution/refresh rate of the first input image and the resolution/refresh rate of the second input image are the same, the electronic apparatus 100 may identify a main scaler capable of processing the first input image with the highest image quality among the plurality of scalers as the first scaler, and may identify one of the remaining scalers (that is, a sub scaler) as the second scaler. The reason for selecting the main scaler to process the input image for a general user is, as described above, that image quality processing on the image for a person with low vision (380) has already been performed.

However, when the resolution/refresh rate of the first input image and the resolution/refresh rate of the second input image are different, the electronic apparatus 100 may select the main scaler to process the input image having the higher resolution/refresh rate, and may select the sub scaler to process the input image having the lower resolution/refresh rate. For example, when the resolution/refresh rate of the first input image is higher than the resolution/refresh rate of the second input image, the electronic apparatus 100 may select the main scaler to process the first input image among the plurality of scalers, and may select the sub scaler to process the second input image. Conversely, when the resolution/refresh rate of the second input image is higher than the resolution/refresh rate of the first input image, the electronic apparatus 100 may select the main scaler to process the second input image among the plurality of scalers, and may select the sub scaler to process the first input image.

Meanwhile, when the input image is input, the electronic apparatus 100 may identify a first scaler for scaling the first input image for a general user and a second scaler for scaling a second input image for a person with low vision.

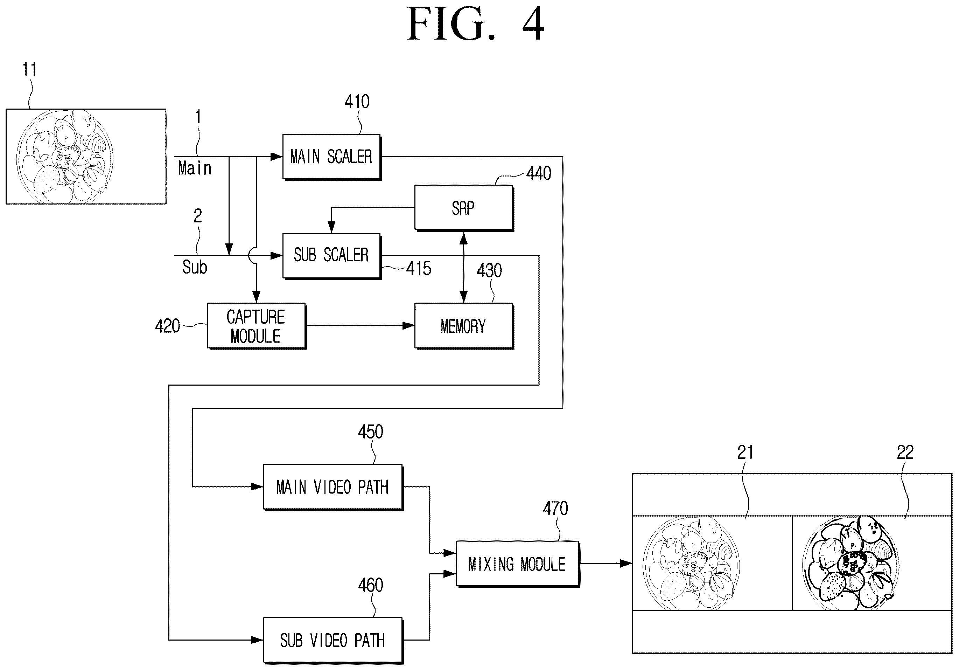

FIG. 4 is a view provided to explain a method of obtaining a plurality of images by processing one input image in a multi-view mode according to an embodiment. Meanwhile, since the process of identifying the main scaler and the sub scaler has been described in detail in FIG. 3, detailed description thereof will be omitted in this drawing.

When the multi-view mode is executed, the electronic apparatus 100 may include two pipelines (or video pipelines), namely, a main pipeline 1 and a sub-pipeline 2. The main pipeline 1 is a path for processing an input image 11 to generate a first image 21 for a general user, and the sub-pipeline 2 is a path for processing the input image 11 to generate a second image 22 for a user with low vision. The pipelines 1 and 2 may each include modules for processing an image. The modules may be implemented by hardware, software, or a combination of hardware and software. Although the two pipelines 1 and 2 are named the main pipeline 1 and the sub-pipeline 2, this is merely an example, and the two pipelines 1 and 2 may be referred to as a first pipeline 1 and a second pipeline 2.

The electronic apparatus 100 may input the input image 11 into the main pipeline 1. The input image 11 to be processed in the sub-pipeline 2 may be provided from the main pipeline 1. In other words, since the electronic apparatus 100 processes one input image 11 to generate the first image 21 for a general user and the second image 22 for a user with low vision, the input image 11 input to the main pipeline 1 may be processed in the main pipeline 1 and may also be transmitted to the sub-pipeline 2 for processing therein.

The main pipeline 1 may perform image quality processing on the input image 11 to generate the first image 21. The main pipeline 1 may include a main scaler 410 and a main video path 450.

The main scaler 410 may scale the input image 11 to match the resolution (or size) at which the first image 21 is displayed on the display 150. The scaling may include up-scaling for compensating pixels that increase in a low-resolution image in order to implement a high-resolution image.

The main video path 450 is a path for performing image quality processing on the scaled image to generate the first image 21. The main video path 450 may include an image quality processing module. The image quality processing module may include at least one module for adjusting the frame rate of the image and adjusting the contrast, color, and sharpness of the image. The image quality processing module may convert the frame rate of the image. For example, the image quality processing module may convert the frame rate of the image to 120 Hz. In addition, the image quality processing module may remove image degradation or noise, and may adjust at least one of contrast, color, color temperature, sharpness, or brightness of the image. However, the present example is not limited thereto, and the image quality processing module may perform various processing to improve the image quality.

Through such a process, the processor 190 may perform image quality improvement processing on the input image 11 to obtain the first image 21 of high quality.

The sub-pipeline 2 may perform image quality processing for a person with low vision (i.e., flattening processing and/or contour processing) on the input image 11, and may perform image quality processing on the processed image to generate the second image 22. The sub-pipeline 2 may include a capture module 420, memory 430, an SRP 440, a sub scaler 415, and a sub video path 460.

The capture module 420 may capture (or copy) the input image 11, lower the resolution of the captured image through down-sampling, and adjust the frame rate of the captured image. The image in which the resolution and the frame rate are adjusted may be stored in the memory 430. The SRP 440 may obtain the image stored in the memory 430, and may perform contour processing and/or flattening processing on the obtained image.

The sub scaler 415 may scale the input image, on which flattening processing and/or contour processing has been performed, to match the resolution at which the second image 22 is displayed on the display 150. The scaling may include up-scaling for compensating pixels that increase in a low-resolution image in order to implement a high-resolution image.

The sub video path 460 is a path for performing image quality processing on the scaled image to generate the second image 22. The sub video path 460 may include an image quality processing module. The image quality processing module may include at least one module for adjusting the frame rate of the image and adjusting the contrast, color, and sharpness of the image. The image quality processing module may also convert the frame rate of the image. In addition, the image quality processing module may remove image degradation or noise, and may adjust at least one of contrast, color, color temperature, sharpness, or brightness of the image. However, the present disclosure is not limited thereto, and the image quality processing module may perform various processing to improve the image quality.

Further, the image quality processing module may perform image quality processing based on the intensity and color of the contour. For example, the image quality processing module may determine a setting value corresponding to the intensity and color of the contour among a plurality of setting values for image quality processing, and may adjust contrast, color, color temperature, sharpness, brightness, etc. of the image by using an image quality adjustment function corresponding to the determined setting value. Accordingly, image quality processing may be performed such that the higher the intensity of the contour, the thicker and darker the contour appears.

Through such a process, the electronic apparatus 100 may perform flattening processing and/or contour processing on the input image 11, and may perform image quality improvement processing to obtain the second image 22 of high quality.

According to an embodiment, the processing for improving the image quality may be performed using an artificial intelligence (AI) model. The AI model may be composed of element technologies utilizing machine learning (deep learning) and machine learning techniques. The AI technology may be implemented using algorithms. Here, an algorithm or a set of algorithms for implementing the AI model is referred to as a neural network. The neural network may receive input data, perform computations for analysis and classification, and output resulting data.

The electronic apparatus 100 may use a mixing module 470 to mix (or multiplex) the first image 21 and the second image 22 to generate an output image including the first image 21 and the second image 22. The electronic apparatus 100 may display the output image including the first image 21 and the second image 22 on the display 150. Accordingly, the first image 21 and the second image 22 may be displayed together on the display 150.

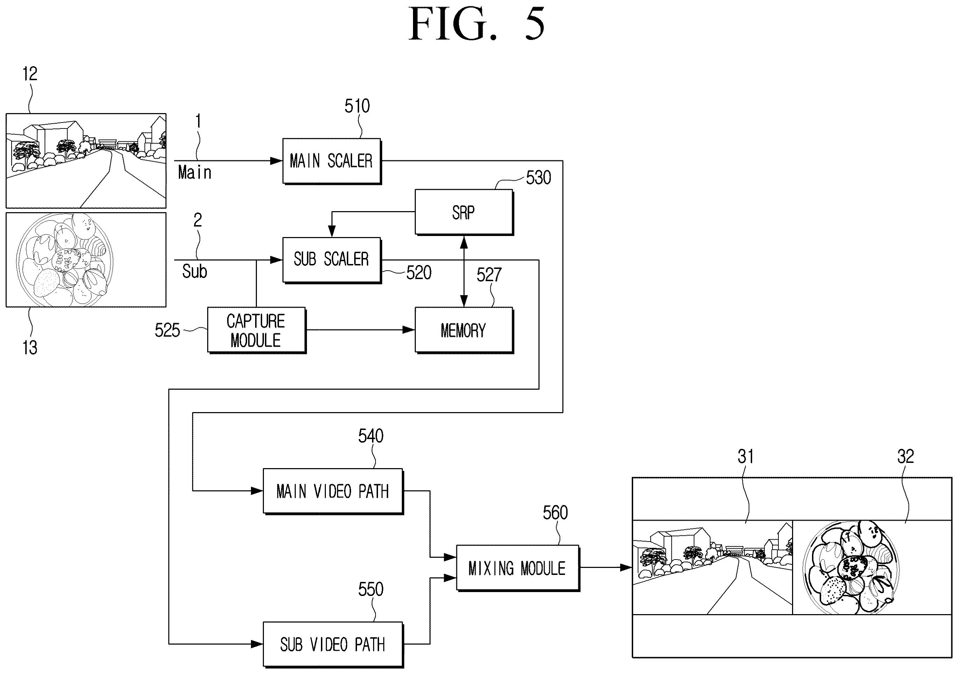

FIG. 5 is a view provided to explain a method of obtaining a plurality of images by processing a plurality of input images in a multi-view mode according to an embodiment. Meanwhile, since the process of identifying the main scaler and the sub scaler has been described in detail in FIG. 3, detailed description thereof will be omitted.

When the multi-view mode is executed, the electronic apparatus 100 may include two pipelines (or video pipelines), namely, a main pipeline 1 and a sub-pipeline 2. The main pipeline 1 is a path for processing a first input image 12 to generate the first image 21 for a general user, and the sub-pipeline 2 is a path for processing a second input image 13 to generate the second image 22 for a user with low vision. The pipelines 1 and 2 may each include modules for processing images, which may be implemented by hardware, software, or a combination thereof. Although the two pipelines 1 and 2 are referred to as the main pipeline 1 and the sub-pipeline 2, this is merely an example, and they may alternatively be referred to as a first pipeline 1 and a second pipeline 2.

The electronic apparatus 100 may input the first input image 12 into the main pipeline 1, and the second input image 13 into the sub-pipeline 2. In other words, the electronic apparatus 100 may process the first input image 12 to generate a first image 31 for a general user and process the second input image 13 to generate a second image 32 for a user with low vision.

The main pipeline 1 may perform image quality processing on the first input image 12 to generate the first image 31. The main pipeline 1 may include a main scaler 510 and a main video path 540.

The main scaler 510 may scale the first input image 12 to match the resolution (or size) at which the first image 31 is displayed on the display 150. The scaling may include up-scaling for compensating pixels that increase in a low-resolution image in order to implement a high-resolution image.

The main video path 540 is a path for performing image quality processing on the scaled image to generate the first image 31. The main video path 540 may include an image quality processing module. The image quality processing module may include at least one module for adjusting the frame rate and adjusting contrast, color, and sharpness of the image. The image quality processing module may convert the frame rate of the image. For example, the image quality processing module may convert the frame rate of the image to 120 Hz. In addition, the image quality processing module may remove image degradation or noise, and may adjust at least one of contrast, color, color temperature, sharpness, or brightness of the image. However, the present example is not limited thereto, and the image quality processing module may perform various processing to improve the image quality.

Through such a process, the processor 190 may perform image quality improvement processing on the first input image 12 to obtain the first image 31 of high quality.

The sub-pipeline 2 may perform image quality processing (that is, flattening processing and/or contour processing) for a person with low vision on the second input image 13, and then perform image quality processing on the processed image to generate the second image 32. The sub-pipeline 2 may include a capture module 525, memory 527, an SRP 530, a sub scaler 520, and a sub video path 550.

The capture module 525 may capture (or copy) the second input image 13, down-sample the captured image to reduce resolution, and adjust the frame rate of the captured image. The image in which the resolution and the frame rate have been adjusted may be stored in the memory 527. The SRP 530 may obtain the image stored in the memory 527, and perform contour processing and/or flattening processing on the obtained image.

The sub scaler 520 may scale the input image on which the flattening and/or contour processing has been performed to match the resolution at which the second image 32 is displayed on the display 150. The scaling may include up-scaling to compensate for pixels that increase in a low-resolution image to implement a high-resolution image.

The sub video path 550 is a path for generating the second image 32 by performing image quality processing on the scaled image. The sub video path 550 may include an image quality processing module. The image quality processing module may include at least one module for adjusting the frame rate of the image and adjusting contrast, color, and sharpness of the image. In addition, the image quality processing module may convert the frame rate of the image. Further, the image quality processing module may remove degradation or noise in the image and adjust at least one of contrast, color, color temperature, sharpness, or brightness of the image. However, the present disclosure is not limited thereto, and the image quality processing module may perform various types of processing to improve the image quality.

In addition, the image quality processing module may perform image quality processing based on the intensity and color of the contour. For example, the image quality processing module may determine a setting value corresponding to the intensity and color of the contour among a plurality of setting values for image quality processing, and may adjust contrast, color, color temperature, sharpness, brightness, etc. of the image by using an image quality adjustment function corresponding to the determined setting value. Accordingly, image quality processing may be performed such that the higher the intensity of the contour, the thicker and darker the contour appears.

Through such a process, the electronic apparatus 100 may perform flattening processing and/or contour processing on the second input image 13, and may perform image quality improvement processing to obtain the second image 32 of high quality.

The electronic apparatus 100 may use a mixing module 470 to mix (or multiplex) the first image 31 and the second image 32 to generate an output image including the first image 31 and the second image 32. The electronic apparatus 100 may display an output image including the first image 31 and the second image 32 on the display 150. Accordingly, the first image 31 and the second image 32 may be displayed together on the display 150.

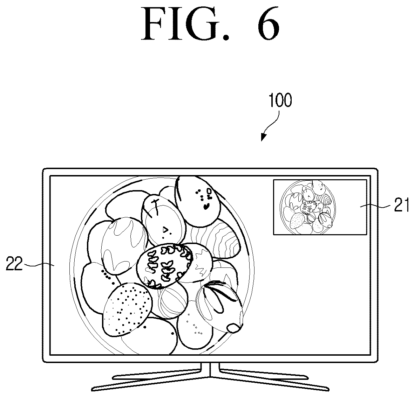

Meanwhile, the electronic apparatus 100 may operate in a multi-view mode that displays the plurality of images 21 and 22 side by side, as shown in FIG. 1. However, this is merely one embodiment, and as shown in FIG. 6, the plurality of images 21 and 22 may be displayed in a Picture-in-Picture (PIP) mode. In other words, the electronic apparatus 100 may display the second image 22 for a person with low vision as the main screen and the first image 21 for a general user as the sub-screen.

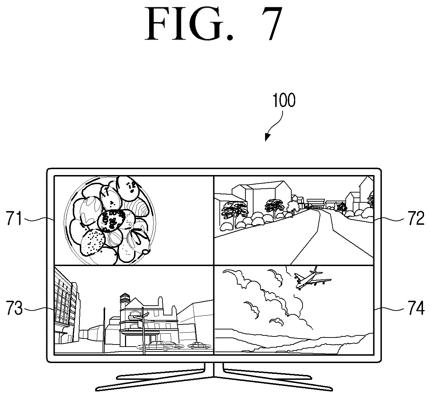

In addition, the electronic apparatus 100 may display two images 21 and 22 during the multi-view mode as shown in FIG. 1, but this is merely one embodiment, and may operate in a multi-view mode that displays three or more images. In this case, the electronic apparatus 100 may include scalers to correspond to the number of screens displayed during the multi-view mode. For example, as shown in FIG. 7, when the electronic apparatus 100 may operate in a multi-view mode that simultaneously displays four images 71 to 74, the electronic apparatus 100 may include four scalers. In this case, as previously described, the electronic apparatus 100 may identify a scaler for processing each of the plurality of images based on attribute information of the plurality of input images. In other words, when the attribute information of a plurality of input images is identical, the electronic apparatus 100 may select a first scaler capable of processing with high image quality in order to process an input image for a general user among the plurality of input images, and may select a second scaler with lower performance than the first scaler for processing an input image for a person with low vision among the plurality of input images. Further, when the attribute information of the plurality of input images is different, the electronic apparatus 100 may select a scaler capable of processing the plurality of input images based on the attribute information of the plurality of input images, and may scale the plurality of images.

In addition, in the above-described embodiment, it has been described that the electronic apparatus 100 processes at least one input image to obtain a plurality of images, and outputs the obtained plurality of images through the display 150, but this is merely one embodiment, and the electronic apparatus 100 may be implemented as a server. Specifically, the electronic apparatus 100 may process at least one input image received from an external device, as described above, to obtain a plurality of images, and may transmit the obtained images to an external display device. In this case, the display device may provide the plurality of images received from the electronic apparatus 100 in a multi-view mode.

Further, in the case where the electronic apparatus 100 is a device to which a function for providing 3D images is applied, when an image for a person with low vision is selected as a 3D image, the electronic apparatus 100 may further include a module for processing the input image as a 3D image on the sub video paths 460 and 550 included in sub-pipeline 2. Accordingly, when a person with low vision wears 3D glasses to view a 3D image, the electronic apparatus 100 may further include a module for processing 3D images on the sub video paths 460 and 550, so that the image for a person with low vision can be processed as a 3D image.

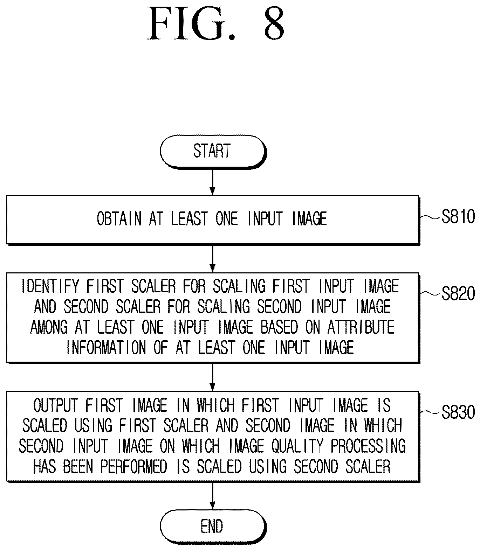

FIG. 8 is a flowchart provided to explain a method of controlling an electronic apparatus according to an embodiment.

First, the electronic apparatus 100 obtains at least one input image (S810). In this case, as shown in FIG. 4, the electronic apparatus 100 may process one input image to output a plurality of images, and as shown in FIG. 5, the electronic apparatus 100 may process each of a plurality of input images to process a plurality of images.

The electronic apparatus 100 identifies a first scaler for scaling a first input image and a second scaler for scaling a second input image among at least one input image based on attribute information of the at least one input image (S820). Specifically, when there is only one input image, the electronic apparatus 100 may identify the scaler capable of processing with the highest image quality among the plurality of scalers as the first scaler, and may identify one of the remaining scalers as the second scaler. Alternatively, when there are a plurality of input images, the electronic apparatus 100 may compare the attribute information of a first input image and attribute information of a second input image among the plurality of input images. When the attribute information of the first input image and the attribute information of the second input image are the same, the electronic apparatus 100 may identify the scaler capable of processing with the highest image quality among the plurality of scalers as the first scaler, and may identify one of the remaining scalers as the second scaler. When the attribute information of the first input image has higher image quality than the attribute information of the second input image (that is, when the resolution and/or refresh rate of the first input image included in the attribute information of the first input image is higher than that of the second input image included in the attribute information of the second input image), the electronic apparatus 100 may identify the scaler capable of processing with the highest image quality as the first scaler, and may identify one of the remaining scalers as the second scaler. Alternatively, when the attribute information of the second input image has higher image quality than the attribute information of the first input image (that is, when the resolution and/or refresh rate of the second input image included in the attribute information of the second input image is higher than that of the first input image included in the attribute information of the first input image), the electronic apparatus 100 may identify the scaler capable of processing with the highest image quality as the second scaler, and may identify one of the remaining scalers as the first scaler.

The electronic apparatus 100 outputs a first image, which is obtained by performing scaling on the first input image using the first scaler, and a second image, which is obtained by performing scaling on the second input image on which image quality processing has been performed using the second scaler (S830). In this case, the image quality processing may include at least one of flattening processing on the second input image or contour processing for emphasizing the contours of an object included in the second input image.

Meanwhile, when a user command to select an image quality improvement function for a person with low vision is input while an operation corresponding to a multi-view function is performed, the electronic apparatus 100 may display a menu for selecting an image for performing image quality processing for a person with low vision. Subsequently, the electronic apparatus 100 may identify a second input image for performing image quality processing for a person with low vision among a plurality of input images based on a user input entered through the menu.

Meanwhile, the methods according to an embodiment may be included and provided in a computer program product. The computer program product may be traded as a product between a seller and a purchaser. The computer program product may be distributed in the form of a storage medium (e.g., compact disc read only memory (CD-ROM)) that is readable by devices, may be distributed through an application store (e.g., PlayStore^{™}) or directly between two user devices (e.g., smartphones), or may be distributed online (e.g., by downloading or uploading). In the case of an online distribution, at least part of the computer program product (e.g., a downloadable application) may be at least temporarily stored in a storage medium readable by a machine such as a server of the manufacturer, a server of an application store, or the memory of a relay server, or may be temporarily generated.

The methods according to various embodiments may be implemented as software including an instruction stored in machine-readable storage media, which can be read by machine (e.g.: computer). The machine refers to a device that calls instructions stored in a storage medium, and can operate according to the called instructions, and the device may include an electronic apparatus according to the aforementioned embodiments.

Meanwhile, the machine-readable storage medium may be provided in a form of a non-transitory storage medium. Here, the term 'non-transitory' means that the storage medium is tangible without including a signal (e.g., electromagnetic waves), and does not distinguish whether data are semi-permanently or temporarily stored in the storage medium. For example, a 'non-transitory storage medium' may include a buffer in which data is temporarily stored.

In case the instruction is executed by a processor, the processor may perform a function corresponding to the instruction by itself, or by using other components under its control. An instruction may include a code that is generated or executed by a compiler or an interpreter.

Although preferred embodiments of the present disclosure have been shown and described above, the disclosure is not limited to the specific embodiments described above, and various modifications may be made by one of ordinary skill in the art without departing from the spirit of the disclosure as claimed in the claims, and such modifications are not to be understood in isolation from the technical ideas or prospect of the disclosure.

## Claims

1. An electronic apparatus comprising:
memory;
a display; and
a processor for controlling the electronic apparatus,
wherein the processor is configured to:
obtain at least one input image;
identify a first scaler for scaling a first input image and a second scaler for scaling a second input image among the at least one input image based on attribute information of the at least one input image; and
control the display to output a first image in which the first input image is scaled using the first scaler and a second image in which the second input image, on which image quality processing has been performed, is scaled using the second scaler.

2. The electronic apparatus as claimed in claim 1, wherein based on there being only one input image, the processor is configured to:
identify a scaler capable of processing with the highest image quality among a plurality of scalers as the first scale, and identify one of the remaining scalers as the second scaler.

3. The electronic apparatus as claimed in claim 1, wherein the attribute information of the at least one input image comprises at least one of resolution or a refresh rate of the at least one input image.

4. The electronic apparatus as claimed in claim 3, wherein based on there being a plurality of input images, the processor is configured to:
based on attribute information of a first input image and attribute information of a second input image among the plurality of input images being the same, identify a scaler capable of processing with the highest image quality among a plurality of scalers as the first scaler, and identify one of the remaining scalers as the second scaler.

5. The electronic apparatus as claimed in claim 4, wherein the processor is configured to:
based on resolution and/or a refresh rate of the first input image included in attribute information of the first input image being higher than resolution and/or a refresh rate of the second input image included in attribute information of the second input image, identify a scaler capable of processing with the highest image quality as the first scaler, and identify one of the remaining scalers as the second scaler; and
based on resolution and/or a refresh rate of the second input image included in attribute information of the second input image being higher than resolution and/or a refresh rate of the first input image included in attribute information of the first input image, identify a scaler capable of processing with the highest image quality as the second scaler, and identify one of the remaining scalers as the first scaler.

6. The electronic apparatus as claimed in claim 1, wherein the image processing comprises at least one of flattening processing on the second input image or contour processing to emphasize contours of an object included in the second input image.

7. The electronic apparatus as claimed in claim 1, wherein the processor is configured to:
based on a user input to select an image quality improvement function for a person with low vision being input while an operation corresponding to the multi-view function is performed, control the display to output a menu for selecting an image to perform image quality processing for the person with low vision; and
identify a second input image for performing image quality processing for a person with low vision among the plurality of input images based on a user input entered through the menu.

8. The electronic apparatus as claimed in claim 1, wherein based on the input image being only one, the second input image is obtained by capturing the first input image.

9. A method of controlling an electronic apparatus, the method comprising:
obtaining at least one input image;
identifying a first scaler for scaling a first input image and a second scaler for scaling a second input image among the at least one input image based on attribute information of the at least one input image; and
outputting a first image in which the first input image is scaled using the first scaler and a second image in which the second input image, on which image quality processing has been performed, is scaled using the second scaler.

10. The method as claimed in claim 9, wherein based on there being only one input image, the identifying comprises:
identifying a scaler capable of processing with the highest image quality among a plurality of scalers as the first scale, and identifying one of the remaining scalers as the second scaler.

11. The method as claimed in claim 9, wherein the attribute information of the at least one input image comprises at least one of resolution or a refresh rate of the at least one input image.

12. The method as claimed in claim 11, wherein based on there being a plurality of input images, the identifying comprises:
based on attribute information of a first input image and attribute information of a second input image among the plurality of input images being the same, identifying a scaler capable of processing with the highest image quality among a plurality of scalers as the first scaler, and identifying one of the remaining scalers as the second scaler.

13. The method as claimed in claim 12, wherein the identifying comprises:
based on resolution and/or a refresh rate of the first input image included in attribute information of the first input image being higher than resolution and/or a refresh rate of the second input image included in attribute information of the second input image, identifying a scaler capable of processing with the highest image quality as the first scaler, and identifying one of the remaining scalers as the second scaler; and
based on resolution and/or a refresh rate of the second input image included in attribute information of the second input image being higher than resolution and/or a refresh rate of the first input image included in attribute information of the first input image, identifying a scaler capable of processing with the highest image quality as the second scaler, and identifying one of the remaining scalers as the first scaler.

14. The method as claimed in claim 9, wherein the image processing comprises at least one of flattening processing on the second input image or contour processing to emphasize contours of an object included in the second input image.

15. The method as claimed in claim 9, comprising:
based on a user input to select an image quality improvement function for a person with low vision being input while an operation corresponding to the multi-view function is performed, outputting a menu for selecting an image to perform image quality processing for the person with low vision; and
identifying a second input image for performing image quality processing for a person with low vision among the plurality of input images based on a user input entered through the menu.
